# EUROPÄISCHE PATENTANMELDUNG

(11) **EP 3 219 774 A1**
(43) Veröffentlichungstag der Anmeldung: **20.09.2017**
(21) Anmeldenummer: 16160948.2
(22) Anmeldetag: 17.03.2016
(51) Int. Cl.: C09J 7/02, C08K 5/5419, C09J 133/04, C09J 183/06

(54) **SILIKONHALTIGER HAFTKLEBSTOFF SOWIE HAFTKLEBEARTIKEL, WIE EIN KLEBEBAND ODER EIN ETIKETT**

(71) Anmelder: Coroplast Fritz Müller GmbH & Co. KG, 42279 Wuppertal (DE)
(72) Erfinder: FRIGGE, Christoph, 45549 Sprockhövel (DE)
(74) Vertreter: Patent- und Rechtsanwälte Dr. Solf & Zapf

(57) **Zusammenfassung**

Die Erfindung betrifft einen silikonhaltigen Haftklebstoff, in Form einer Klebstoffmasse, die mindestens eine erste Klebstoffkomponente und eine zweite, silikonhaltige Klebstoffkomponente enthält. Um einen derartigen Haftklebstoff zu schaffen, der, wenn er ein- oder doppelseitig auf ein Trägermaterial, ein Trennpapier oder eine Trennfolie aufgebracht wird, ein verbessertes Schneidverhalten aufweist, ohne dass dabei ein signifikanter Verlust der Klebkraft und/oder der Scherfestigkeit auftritt, wird vorgeschlagen, dass die zweite, silikonhaltige Klebstoffkomponente aus Polysiloxan, insbesondere aus unvernetztem Polydimethylsiloxan, besteht und vorzugsweise in einem Anteil im Bereich von 1,0 bis 10,0 Masseprozent in der Klebstoffmasse enthalten ist.

## Beschreibung

Die vorliegende Erfindung betrifft einen silikonhaltigen Haftklebstoff, in Form einer Klebstoffmasse, die mindestens eine erste Klebstoffkomponente und eine zweite, silikonhaltige Klebstoffkomponente enthält.

Des Weiteren betrifft die Erfindung einen Haftklebeartikel, wie ein Klebeband, umfassend einen bandförmigen Träger, auf den zumindest einseitig ein Haftklebstoff in Form einer Klebstoffmasse aufgetragen ist, oder ein Etikett, umfassend ein insbesondere aus Papier bestehendes Trägermaterial, auf das zumindest einseitig ein Haftklebstoff in Form einer Klebstoffmasse aufgetragen ist.

Im Rahmen der Anmeldung schließt der allgemeinere Begriff des Haftklebeartikels neben Klebebändern, die der Länge nach bandförmig geschnitten werden, also bei denen die Länge ein Vielfaches der Breite ist, auch entsprechende Stanzteile und insbesondere Etiketten mit ein, bei denen Länge und Breite etwa in der gleichen Größenordnung liegen.

Heute gebräuchliche Haftklebstoffe werden überwiegend aus Natur- oder Synthesekautschuk oder aus Polyacrylaten hergestellt. Kautschukklebstoffe bestehen aus Polyisopren bzw. Blockcopolymeren aus Styrol und Isopren bzw. Butadien und benötigen zur Erlangung haftklebriger Eigenschaften die Abmischung mit Harzen. Zumeist werden noch zusätzlich Mineralöl als Weichmacher und/oder anorganische Füllstoffe oder Pigmente wie Kreide, Zinkoxid oder Titandioxid zugegeben. Acrylathaftklebstoffe bestehen in der Regel aus einem Copolymerisat verschiedener Ester der Acrylsäure. Üblich sind insbesondere 2-Ethylhexylacrylat und n-Butylacrylat.

Daneben gibt es noch lösemittelhaltige Spezialhaftklebstoffe auf der Basis von vernetzten Polydimethylsiloxanen, sogenannte Silikonhaftklebstoffe. Diese bestehen aus linearem Polydimethylsiloxan und/oder Polydimethyldiphenylsiloxan mit endständigen Silanol-Gruppen als Basispolymer und aus einem klebrigmachenden Harz, welches wiederum aus einem quaternären Silikatkern mit ihn umgebenden Trimethylsiloxan-Gruppen und Dimethylsilanol-Gruppen besteht. Beim Entfernen des Lösemittels und Erhitzen kommt es zu einer Kondensationsreaktion zwischen dem Harz und dem Basispolymer, als deren Produkt eine haftklebrige Masse entsteht. Zur Verbesserung der Eigenschaften, insbesondere der Kohäsion, wird das Kondensat noch zusätzlich vernetzt, wobei dies entweder über einen Peroxidkatalysierten Radikalmechanismus oder über einen Platin-katalysierten Additionsmechanismus geschieht. Die Eigenschaften des Klebstoffes hängen dabei von der Kettenlänge der Reaktanden, ihrem Mischungsverhältnis und dem Grad der Vernetzung ab.

Ein Haftklebstoff der eingangs genannten Art ist aus der JPS 62-295982 A bekannt. Dieses Dokument beschreibt die Kombination eines Acrylathaftklebstoffes mit einem Silikonhaftklebstoff zur Erzielung spezieller Klebeeigenschaften. Der Klebstoff findet in einem Befestigungssystem für die Automobilindustrie Anwendung und ist ein Hybridklebstoff, in dem die erste Klebstoffkomponente und die zweite, silikonhaltige Klebstoffkomponente über ein Polyurethan oder ein Polyisocyanat miteinander vernetzt sind.

Des Weiteren sind Haftklebstoffe der eingangs genannten Art aus der US 5 308 887, der US 5 464 659, der US 5 624 763 und der US 8 614 278 bekannt.

Die ersten drei Dokumente beschreiben dabei weitgehend lösungsmittelfreie Kombinationen aus Acrylat- und Silikon-Haftklebstoffen. Diese Haftklebstoffe zeigen eine vorteilhaft gute Haftung auf insbesondere unpolaren Oberflächen. Zu ihrer Herstellung wird der lösungsmittelbasierte Silikonhaftklebstoff zunächst getrocknet und dann in den Acrylatmonomeren gelöst. Nach Zugabe eines Vernetzers und eines Fotoinitiators erfolgt unter der Wirkung von UV-Strahlung eine Polymerisation und Vernetzung, wobei insbesondere im Endprodukt im Wesentlichen zwei getrennte, sich gegenseitig durchdringende Polymernetzwerke eines Polysiloxans und eines Polyacrylats entstehen. Gemäß dem letztgenannten Dokument werden dagegen Siloxan und Acrylat gezielt chemisch zu einem Kopolymer-Netzwerk miteinander vernetzt.

In der Klebeband- oder Etikettenindustrie werden Haftklebstoffe in dünnen Schichten, d. h. mit einer spezifischen Masse im Bereich von 15 g/m² bis 3000 g/m², auf Träger aufgetragen, um daraus entsprechende Klebebänder oder Etiketten zu fertigen. Im fertigen Produkt, aber auch bereits unmittelbar nach der Beschichtung und bei der Verarbeitung, sind dabei insbesondere aggressiv klebende Klebstoffschichten in der Regel mit einem Trennpapier oder einer Trennfolie abgedeckt. Diese bestehen aus einem Papier oder einer Kunststofffolie, welche wiederum häufig ein- oder beidseitig mit einer dünnen Schicht eines vernetzten Polydimethylsiloxans beschichtet sind. Die Grammatur einer solchen Schicht kann insbesondere im Bereich von 0,5 g/m² bis 1,5 g/m² liegen.

Bei der Verarbeitung von Klebebändern oder Etikettenmaterial kommen in der Regel verschiedene Schneidtechniken zur Anwendung, mittels derer ein in großer Breite, insbesondere in einer Breite im Bereich von 100 mm bis 2500 mm, hergestelltes Basisprodukt für die Weiterverarbeitung oder die Endanwendung die passenden Abmessungen erhält. Zwangsläufig geraten die dabei verwendeten Schneidwerkzeuge dabei an den Schnittkanten in direkten Kontakt mit dem Haftklebstoff. Je nach den Eigenschaften des zu schneidenden Materials, wie der Klebstoffdicke, des Verhältnisses der Klebstoffdicke zur Trägerdicke, der Klebrigkeit und den viskoelastischen Eigenschaften des Klebstoffs, die einen sogenannten kalten Fluss verursachen können, aber auch je nach den Umgebungsbedingungen, wie Temperatur und Feuchte, kommt es nach einer mehr oder weniger großen Zahl von Schneidvorgängen zu einem Verschmutzen der Schneidwerkzeuge. Dies ist insbesondere dann der Fall, wenn nicht nur eine, sondern mehrere Lagen in einem Schneidvorgang geschnitten werden oder wenn eine sehr hohe Anzahl von Schneidvorgängen ohne zwischenzeitliche Reinigung durchgeführt wird. Bei Klebebändern werden beispielsweise Rollen durch Kreismesser oder Stichel aus typischen Breitrollen mit bis zu mehreren hundert Lagen abgestochen. In der Etikettenindustrie ist es üblich, selbstklebende Bogenware in Riesen mit mehreren hundert Bögen über einen Planschneider zu schneiden.

Um dem entgegenzuwirken, ist es bekannt, besondere Messergeometrien mit hinterschliffener Schneide sowie auch antihaftbeschichtete Messer einzusetzen oder aber Schneidhilfsstoffe in Form von Talkum oder Schneidöl auf die Schneidwerkzeuge aufzubringen.

Alle diese Maßnahmen sind aber auch immer mit Nachteilen verbunden. So sind flüssige Schneidhilfsstoffe bei der Verarbeitung selbstklebender Papiere kaum einsetzbar, da sie in das Papier eindringen können und es so verschmutzen und schwächen. Auch bei anderen zu schneidenden Materialien sind solche Hilfsstoffe nicht gern gesehen, da sie nicht nur die Trägermaterialien verschmutzen, sondern bei einer Überdosierung, z. B. bei Beginn des Schneidvorganges, gegebenenfalls auch die Klebrigkeit des Haftklebstoffes unkontrolliert reduzieren können. Einmalig aufgebrachte Schneidhilfsstoffe oder auch klebstoffabweisende Beschichtungen der Schneidwerkzeuge, z. B. aus Keramik oder Teflon, nutzen sich zudem oft schnell ab, so dass die Wirkung rasch nachlässt.

Durch die Verschmutzung der Schneidwerkzeuge kann es beispielsweise beim Bogenschneiden oder auch bei der Hochgeschwindigkeitsverarbeitung dazu kommen, dass geschnittene Teile mit ihrer nach dem Schneiden leicht klebrigen Schnittkante an den Schneidwerkzeugen hängen bleiben und dadurch der gesamte Prozess gestört wird.

Der Erfindung liegt das Problem zugrunde, einen silikonhaltigen Haftklebstoff zu schaffen, der, wenn er ein- oder doppelseitig auf ein Trägermaterial, ein Trennpapier oder eine Trennfolie aufgebracht wird, ein im Vergleich mit herkömmlichen Haftklebstoffen verbessertes Schneidverhalten aufweist, ohne dass dabei ein signifikanter Verlust der Klebkraft und/oder der Scherfestigkeit auftritt.

Des Weiteren liegt der Erfindung das Problem zugrunde, einen Haftklebeartikel, wie ein Klebeband oder wie ein Etikett der eingangs genannten Art, mit einem Haftklebstoff auszustatten, der bei der Herstellung der Klebebänder und/oder Etiketten, insbesondere bei während der Herstellung auftretenden Schneidprozessen, unter Ausschluss einer negativen Qualitätsbeeinflussung auf die hergestellten Produkte eine verbesserte Verarbeitbarkeit gewährleistet, wobei die vorstehend beschriebenen Nachteile vermieden werden sollen.

Das der Erfindung zugrunde liegende Problem wird für den Haftklebstoff der eingangs genannten Art dadurch gelöst, dass die zweite, silikonhaltige Klebstoffkomponente aus einem unvernetzten Polysiloxan besteht.

Mit Vorteil kann es sich dabei um ein unvernetztes Polydimethylsiloxan handeln, wobei das Polysiloxan, vorzugsweise das unvernetzte Polydimethylsiloxan, insbesondere in einem Anteil im Bereich von 1,0 bis 10,0 Masseprozent in der Klebstoffmasse enthalten ist.

Für den Haftklebeartikel, insbesondere also das Klebeband und das Etikett der eingangs genannten Art, wird das der Erfindung zugrunde liegende Problem dadurch gelöst, dass die Klebstoffmasse mindestens eine erste Klebstoffkomponente und eine zweite, silikonhaltige Klebstoffkomponente enthält, wobei die zweite, silikonhaltige Klebstoffkomponente wie vorstehend beschrieben geartet bzw. anteilig in der Klebstoffmasse enthalten ist.

Der Träger oder das Trägermaterial kann aus einem Papier, einer Folie oder einem textilen Stoff, wie einem Gewebe und/oder einem Vlies, bestehen und vorzugsweise eine Dicke im Bereich von 10 µm bis 500 µm, insbesondere im Bereich von 20 µm bis 200 µm, aufweisen.

Polysiloxane bestehen aus einer Kette, die abwechselnd Silizium- und Sauerstoffatome enthält. Dabei sättigen organische Reste die freien Valenzen des Siliziums ab. Das Polysiloxan mit dem einfachsten Aufbau und gleichzeitig mit der mit Abstand größten - jedoch nicht erfindungsgemäßen - Verbreitung ist das Polydimethylsiloxan, bei dem diese organischen Reste Methylgruppen sind. Polydimethylsiloxane finden in Form von Silikonölen weite Verbreitung. Im Gegensatz zu Mineralölen oder Pflanzenölen haben sie keine organischen,also kohlenstoffbasierten, Kettenanteile.

Die chemische Formel des Polydimethylsiloxans lautet (CH₃)₃Si-[O-Si(CH₃)₂]ₘ-O-Si(CH₃)₃, wobei sich der Polymerisationsgrad zu n = m + 2 ergibt und für den Index m gilt: m ≥ 0. Die molare Masse der Wiederholeinheit beträgt 74,15 g/mol. Polydimethylsiloxan ist farblos, durchsichtig und gilt als ungiftig und chemisch inert. Unter "inert" wird dabei auch subsumiert, dass das Polydimethylsiloxan unter UV-Bestrahlung passiv bleibt und insbesondere nicht mit der ersten Klebstoffkomponente chemisch interagiert.

Das einfachste Silikonöl, welches kommerziell von der Wacker AG als AK 0,65 vertrieben wird, besteht aus einer Si-O-Si-Einheit, bei der die freien Valenzen mit Methylgruppen abgedeckt sind. Der Polymerisationsgrad n ist also gleich 2. Auch diese niedermolekulare Verbindung, ein Dimer, deren Molmasse 162 g/mol beträgt, wird im Rahmen der Anmeldung bereits als erfindungsgemäß einsetzbares "Polydimethylsiloxan" betrachtet. Ihre Viskosität liegt bei 0,65 mm²/s.

Dadurch, dass die Haftklebstoffmasse erfindungsgemäß ein nicht reaktives, lineares Polydimethylsiloxan, insbesondere hoher Molekularmasse, enthält, kommt es bei dem vergleichsweise kurzen Kontakt beim Trennen von mit dem Haftklebstoff beschichteten Artikeln mit einem Schneidwerkzeug zu einer signifikant geringeren Messerverunreinigung als bei nicht erfindungsgemäßen Haftklebeartikeln und nicht zu einem Verkleben der geschnittenen Teile untereinander oder mit dem Messer, so dass störende Auswirkungen auf den Trennprozess deutlich vermindert werden oder ganz unterbleiben.

Unter "hoher Molekularmasse" wird dabei verstanden, dass die molare Masse des Polydimethylsiloxans mindestens 10000 g/mol, vorzugsweise mindestens 50000 g/mol, beträgt. Als Obergrenze des erfindungsgemäß eingesetzten Polydimethylsiloxans kann eine molare Masse von 500000 g/mol angesehen werden.

Grundsätzlich hat sich die Verwendung hochmolekularer Silikone als vorteilhaft herausgestellt. Zwar ist die schneidunterstützende Wirkung niedermolekularer Silikone nicht schlechter, sie haben aber eine deutlich höhere Migrationsneigung, die Probleme an anderer Stelle verursachen könnte.

Das Polydimethylsiloxan wirkt dann vorteilhafterweise als ein internes Schmiermittel, welches beim Schneidvorgang die Schnittkante und das Schneidwerkzeug kurzzeitig passiviert. Durch den erfindungsgemäß vorgesehenen Mengenanteil an Polydimethylsiloxan im Bereich von 1,0 bis 10,0 Masseprozent in der Klebstoffmasse ist dabei gesichert, dass die Klebkraft und die Scherfestigkeit im Vergleich mit bekannten Klebstoffmassen ohne Polydimethylsiloxan nicht signifikant absinken, sondern erhalten bleiben.

Weitere vorteilhafte Ausführungen der Erfindung sind in den Unteransprüchen und der nachfolgenden speziellen Beschreibung enthalten.

In den nachstehend aufgeführten Ausführungsformen der Erfindung werden verschiedene, erfindungsgemäß bevorzugte Haftklebstoff-Rezepturen vorgestellt, die sich insbesondere durch die Natur der ersten Komponente in der Haftklebstoffmasse unterscheiden. Diese Rezepturen werden jeweils Vergleichsrezepturen gegenübergestellt, in denen kein Polydimethylsiloxan enthalten ist.

In Tabelle 1 sind exemplarisch Rezepturen mit einem Synthesekautschuk-Klebstoff aufgeführt:

**Tabelle1: Rezepturen Beispiele 1 a (erfindungsgemäß) und 1 b (Vergleichsbeispiel)**

| | | Hersteller | 1a | 1b |
|---|---|---|---|---|
| Synthesekautschuk | Vecor 4114 | Dexco | 32 % | 30 % |
| Terpenphenolharz | Dertophene T | DRT | 18 % | 17 % |
| Kolophoniumharz | Granolite P | DRT | 18 % | 17 % |
| Weichharz | Wingtack10 | Cray Valley | 26,5 % | 25 % |
| PE-Wachs | A-C8 | Honeywell | 5 % | 5 % |
| Oxidationsschutz | Irganox 1010 | BASF | 0,5 % | 0,5 % |
| Silikonöl | AK 500000 | Wacker | - | 5 % |

Bei dem Silikonöl AK 500000 der Firma Wacker handelte es sich um ein Polydimethylsiloxan mit einer kinematischen Viskosität von 500000 mm²/s.

Generell sollte die kinematische Viskosität des erfindungsgemäß eingesetzten Polydimethylsiloxans mindestens 10000 mm²/s, vorzugsweise mindestens 100000 mm²/s, betragen. Als Obergrenze kann ein Wert von 10 Millionen mm²/s angesehen werden.

Bei dem Weichharz handelt es sich um ein klebrig machendes synthetisches C5-Harz mit einem Erweichungspunkt von weniger als 20°C.

"Oxidationsschutz" in der Tabelle 1 bezeichnet die Beimengung von Substanzen, welche der thermooxidativen Schädigung eines Polymers, hier eines Schmelzklebstoffes, entgegenwirken. Bevorzugt werden dafür, wie hier mit insbesondere dem genannten Irganox 1010, sterisch gehinderte Phenole als Radikalfänger eingesetzt.

Beide Beispielklebstoffe wurden als Schmelzklebstoffe auf ein 80g/m²-Papier beschichtet und mit einem einseitig silikonisierten 100 g/m²-Papier abgedeckt.

In Tabelle 2 sind exemplarisch Rezepturen mit einem Dispersionsacrylat-Klebstoff, unter Berücksichtigung der unterschiedlichen Festkörper, also ohne den Wasseranteil, aufgeführt.

Unter einem Dispersionsacrylat versteht man eine wässrige Dispersion eines Polyacrylsäureesters, die durch Emulsionspolymerisation hergestellt ist.

**Tabelle 2: Rezepturen Beispiele 2a (erfindungsgemäß) und 2b (Vergleichsbeispiel)**

| | | Hersteller | 2a | 2b |
|---|---|---|---|---|
| Dispersionsacrylat | Acronal V215 (FK 69%) | BASF | 46 % | 43,5 % |
| Dispersionsacrylat | Acronal 80D (FK 50 %) | BASF | 20 % | 19 % |
| Harzdispersion | Dermulsene RE802 (FK 52 %) | DRT | 33,5 % | 32 % |
| DOSS* | OT75 | Airproducts | 0,5 % | 0,5 % |
| Silikonöldispersion | HV495 (FK 40 %) | Dow Corning | - | 5 % |

| | | | | |
|---|---|---|---|---|
| *Dioctylsulfosuccinat | | | | |

Bei der in der Tabelle 2 aufgeführten Silikonöldispersion handelt es sich um eine wässrige Dispersion eines Polydimethylsiloxans. Diese wird nicht durch eine Emulsionspolymerisation, sondern durch nachträgliches Emulgieren eines Polydimethylsiloxans hergestellt. Mit "FK" ist in der zweiten Tabellenspalte dabei der jeweilige Festkörperanteil in der Dispersion bezeichnet.

Beide Beispielklebstoffe wurden in einer Grammatur von 18 g/m² auf ein einseitig silikonisiertes Papier mit einem spezifischen Flächengewicht von 90g/m² aufgebracht, dort getrocknet und dann auf ein Papier mit einem spezifischen Flächengewicht von 80 g/m² transferiert.

In Tabelle 3 sind exemplarisch Rezepturen mit einem UV-Acrylat-Klebstoff aufgeführt.

**Tabelle 3: Rezepturen Beispiele 3a (erfindungsgemäß) und 2b (Vergleichsbeispiel)**

| | | Hersteller | 3a | 3b |
|---|---|---|---|---|
| Polyacrylat | AcResin 3502 | BASF | 100 % | 97 % |
| Silikonöl | AK 500000 | Wacker Chemie | - | 3 % |

Bei dem Silikonöl AK 500000 der Firma Wacker handelte es sich wiederum um ein Polydimethylsiloxan mit einer kinematischen Viskosität von 500000 mm²/s.

Beide Beispielklebstoffe wurden mit einer Grammatur von 30 g/m² auf eine einseitig silikonisierte PET-Folie einer Dicke von 50 µm aufgetragen, dort unter der Wirkung einer UV-C-Dosis von 65 mJ/cm² vernetzt und dann auf eine nicht silikonisierte 50 µm dicke PET-Folie transferiert. Die UV-C-Dosis wurde mit dem Dosimeter "Power Puck" der Fa. EIT, Sterling, Virginia, bestimmt.

An den Mustern wurden in Form der Klebkraft und der Scherfestigkeit typische, für die Adhäsion und Kohäsion repräsentative Haftklebstoff-Basisdaten bestimmt.

Ferner wurde in einem Labortest die Schneidbarkeit des Selbstklebematerials geprüft. Dazu wurden jeweils zwei DIN-A4 Bögen des Haftmaterials übereinander gelegt und mit einer handelsüblichen Schlagschere mit gereinigtem, glatten Stahlmesser 5 mm breite Streifen abgeschnitten. Das Messer besaß eine Breite im Bereich von 50 mm bis 60 mm. Die Verunreinigung des Messers wurde nach mehreren Schnitten geprüft.

Die Muster der Beispiele zeigten die in Tabelle 4 aufgeführten Eigenschaften.

Bei der in der Tabelle 4 genannten DIN EN 1939 "Klebebänder - Bestimmung der Klebkraft" handelt es sich um die Version DIN EN 1939:2003-12.

Die Scherfestigkeit wurde nach der DIN EN 1943:2003-01, "Klebebänder - Messung des Scherwiderstandes unter statischer Belastung"; deutsche Fassung EN 1943:2002, bestimmt.

**Tabelle 4: Vergleich der Eigenschaften der Beispiele**

| | Beispiel 1a | Beispiel 1b | Beispiel 2a | Beispiel 2b | Beispiel 3a | Beispiel 3b |
|---|---|---|---|---|---|---|
| Klebkraft [N/cm] DIN EN 1939 | >8* | >8* | 7 | 7 | 6,5 | 6 |
| Scherfestigkeit 625mm²; 23°C [min] | > 10000 | > 10000 | > 10000 | > 10000 | > 10000 | > 10000 |
| Schneidtest mit 5 Schnitten | Messer auf 45 mm stark klebrig, Streifen haften am Messer | Messer auf 1 mm klebrig, Streifen haften nicht am Messer | Messer auf 45 mm stark klebrig, Streifen haften am Messer | Messer auf 1 mm klebrig, Streifen haften nicht am Messer | Messer auf 45 mm stark klebrig, Streifen haften am Messer | Messer auf 1 mm klebrig, Streifen haften nicht am Messer |
| Schneidtest mit 50 Schnitten | - | Messer auf 3 mm klebrig, Streifen haften nicht am Messer | - | Messer auf 2 mm klebrig, Streifen haften nicht am Messer | - | Messer auf 3 mm klebrig, Streifen haften nicht am Messer |

| | | | | | | |
|---|---|---|---|---|---|---|
| *Papierriss | | | | | | |

Die Ergebnisse verdeutlichen, dass die Erfindung bei Schneidprozessen, unter Ausschluss eines negativen Einflusses auf Klebkraft und Scherfestigkeit eine verbesserte Verarbeitbarkeit bewirkt.

Darüber hinaus wurden mit den Mustern folgende Praxistests durchgeführt:
Riese der Abmessung 70 cm x 100 cm mit je 200 Bögen Haftmaterial wurden an einem Planschneider mit Glattmesser in kleine Quadrate der Abmessung 5 cm x 5 cm geschnitten. Bei den Materialien aus den Beispielen 1 b, 2b und 3b war dies problemlos möglich, bei den Materialien aus den Beispielen 1a, 2a und 3a verklebten die Bögen bereits nach dem dritten Schnitt und blieben am Messer hängen, so dass ein sauberes Schneiden und Ablegen der Quadratstapel nicht mehr möglich war.

Die Erfindung ist nicht auf die dargestellten Ausführungsbeispiele beschränkt, sondern umfasst im Rahmen der Ansprüche auch alle im Sinne der Erfindung gleichwirkenden Ausführungen und Verwendungen. So ist es denkbar, dass im Gegensatz zu dem exemplarisch beschriebenen Polydimethylsiloxan ein Polysiloxan eingesetzt wird, bei dem neben und/oder anstelle der Methylgruppen andere Substituenten, wie z. B. Alkylreste mit mehr als einem Kohlenstoffatom, Phenylreste und/oder Halogene, an die Hauptkette gebunden sind,

Was den schon erwähnten Einfluss der molaren Masse des Polydimethylsiloxans betrifft, so wird dessen Migrationsfähigkeit mit zunehmendem Polymerisationsgrad n kleiner bzw. mit abnehmendem Polymerisationsgrad n größer. Verwendet man beispielsweise in Beispiel 1 b statt AK 500000, das aus deutlich mehr als 1000 Dimethylsiloxaneinheiten in der Polymerkette besteht, ein AK 50 mit unter 100 Dimethylsiloxaneinheiten in der Polymerkette, so kommt es bereits nach einer Wärmelagerung von 24 h bei 70 °C zu einer sichtbaren Silikonwanderung in den Papierträger.

Vorteilhaft erscheint jedoch dessen ungeachtet die Verwendung niedermolekularer Silikonöle, wenn diese mikroverkapselt werden. Unter Mikroverkapselung versteht man allgemein die Umhüllung feinster Tropfen eines meist flüssigen Wirkstoffes mit einem dünnwandigen, inerten Material. Auf die Erfindung bezogen verhindert eine solche Verkapselung eine unerwünschte Migration von niedermolekularem Silikonöl. Im Moment des Schneidens wird die Hülle der Mikrokapseln durch das Schneidwerkzeug verletzt. Das Silikonöl, welches den flüssigen Kern bildet, tritt dadurch aus und nimmt lokal eng begrenzt seine Funktion als Trennmittel wahr. Die Teilchengröße der Mikrokapseln kann in einem Bereich von 3 µm bis 800 µm, vorzugsweise in einem Bereich von 5 µm bis 100 µm, liegen. Als inert bezeichnet man Materialien, die unter geeigneten Bedingungen, wie Druck und Temperatur, chemisch mit den meisten Stoffen nicht reagieren. Als inert werden z. B. Keramik, Fluorkunststoffe, wie PTFE, und die Edelmetalle Gold und Platin bezeichnet, sowie aber auch die Gelatine mikroverkapselter Medikamente. Eine Mikroverkapselung von Silikonöl ist an sich bekannt und beispielsweise in der DE 101 56 672 A1 beschrieben. Die dort beschriebenen, exemplarisch hergestellten Partikel sind Mikrokapseln mit einer mittleren Teilchengröße von 3 µm und 5 µm, die eine flüssige Phase von Silikonöl aufweisen, das in Kapselwänden aus polyharnstoffhaltigem Material eingeschlossen ist.

Ferner ist die Erfindung nicht auf die im Anspruch 1 und in den anderen unabhängigen Ansprüchen definierten Merkmalskombinationen beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal der unabhängigen Ansprüche weggelassen bzw. durch mindestens ein an anderer Stelle der Anmeldung offenbartes Einzelmerkmal ersetzt werden kann. Insofern sind die Ansprüche lediglich als ein erster Formulierungsversuch für eine Erfindung zu verstehen.

## Patentansprüche

1. Haftklebstoff, in Form einer Klebstoffmasse, die mindestens eine erste Klebstoffkomponente und eine zweite, silikonhaltige Klebstoffkomponente enthält,
**dadurch gekennzeichnet, dass** die zweite, silikonhaltige Klebstoffkomponente aus einem unvernetzten Polysiloxan besteht.

2. Haftklebstoff nach Anspruch 1,
**dadurch gekennzeichnet, dass** die zweite, silikonhaltige Klebstoffkomponente aus einem unvernetzten Polydimethylsiloxan besteht.

3. Haftklebstoff nach Anspruch 1 oder 2,
**dadurch gekennzeichnet, dass** die zweite, silikonhaltige Klebstoffkomponente in einem Anteil im Bereich von 1,0 bis 10,0 Masseprozent in der Klebstoffmasse enthalten ist.

4. Haftklebstoff nach einem der Ansprüche 1 bis 3,
**dadurch gekennzeichnet, dass** die molare Masse des Polysiloxans, insbesondere des Polydimethylsiloxans, mindestens 10000 g/mol, vorzugsweise mindestens 50000 g/mol, und höchstens 500000 g/mol beträgt.

5. Haftklebstoff nach einem der Ansprüche 1 bis 3,
**dadurch gekennzeichnet, dass** die molare Masse des Polysiloxans, insbesondere des Polydimethylsiloxans, kleiner ist als 10000 g/mol, wobei die zweite, silikonhaltige Klebstoffkomponente mikroverkapselt ist.

6. Haftklebstoff nach einem der Ansprüche 1 bis 5,
**dadurch gekennzeichnet, dass** die kinematische Viskosität des Polysiloxans, insbesondere des Polydimethylsiloxans, mindestens 10000 mm²/s, vorzugsweise mindestens 100000 mm²/s, und höchstens 10000000 mm²/s beträgt.

7. Haftklebstoff nach einem der Ansprüche 1 bis 6,
**dadurch gekennzeichnet, dass** die erste Klebstoffkomponente ein Haftklebstoff
- auf Basis eines Synthese- oder Naturkautschuks,
- ein Dispersionsklebstoff auf der Basis eines Polyacrylsäureesters,
- ein Schmelzklebstotf auf Basis eines UV-vernetzten Polyacrylsäureesters
- oder ein UV-polymerisierter Polyacrylsäureester ist.

8. Haftklebeartikel, insbesondere Klebeband, umfassend einen bandförmigen Träger, auf den zumindest einseitig ein Haftklebstoff in Form einer Klebstoffmasse aufgetragen ist,
**dadurch gekennzeichnet, dass** die Klebstoffmasse die Merkmale eines der Ansprüche 1 bis 7 aufweist.

9. Haftklebeartikel, insbesondere Etikett, umfassend ein insbesondere aus Papier bestehendes Trägermaterial, auf das zumindest einseitig ein Haftklebstoff in Form einer Klebstoffmasse aufgetragen ist,
**dadurch gekennzeichnet, dass** die Klebstoffmasse die Merkmale eines der Ansprüche 1 bis 7 aufweist.

10. Haftklebeartikel nach Anspruch 8 oder 9,
**dadurch gekennzeichnet, dass** der Träger oder das Trägermaterial aus einem Papier, einer Folie oder einem textilen Stoff, wie einem Gewebe und/oder einem Vlies, besteht.

11. Haftklebeartikel nach Anspruch 10,
**dadurch gekennzeichnet, dass** die Folie oder der textile Stoff aus einem Polyolefin, einem Polyester, einem Polyamid, einem Polystyrol oder aus einem anderen Kunststoff besteht.

12. Haftklebeartikel nach einem der vorhergehenden Ansprüche,
**dadurch gekennzeichnet, dass** der Träger oder das Trägermaterial eine Dicke im Bereich von 10 µm bis 500 µm, vorzugsweise im Bereich von 20 µm bis 200 µm, aufweist.

13. Haftklebeartikel nach einem der vorhergehenden Ansprüche,
**dadurch gekennzeichnet, dass** die Klebstoffmasse mit einem zusätzlichen Liner abgedeckt ist, welcher aus einem ein- oder doppelseitig silikonisierten Papier oder aus einer ein- oder doppelseitig silikonisierten Folie besteht.
